# EUROPEAN PATENT APPLICATION

(11) **EP 2 136 288 A2**
(43) Date of publication of application: **23.12.2009**
(21) Application number: 09161865.2
(22) Date of filing: 03.06.2009
(51) Int. Cl.: G06F 3/023

(54) **Electronic apparatus with programmable buttons**

(30) Priority: 04.06.2008 JP 2008146372
(71) Applicant: Sony Corporation, Tokyo (JP)
(72) Inventor: Hasegawa, Kiyoshi, Tokyo (JP); Takegami, Yuri, Tokyo (JP); Hori, Taiki, Tokyo (JP)
(74) Representative: Thévenet, Jean-Bruno

(57) **Abstract**

An electronic apparatus includes a display portion (2), a plurality of first buttons (11a-11e), a second button (12), and a display controller. The display portion (2) displays a screen (6). The plurality of first buttons (11a-11e) are disposed along an outer circumference of the screen (6). The display controller displays icons (14a-14e) representing functions of the plurality of first buttons (11a-11e) at positions respectively corresponding to the plurality of first buttons (11a-11e) along an inner circumference of the screen (6), and changes the functions allocated to the plurality of first buttons (11a-11e) and the displayed icons (14a-14e) in accordance with a press of the second button (12).

## Description

### Background of the Invention

### 1. Field of the Invention

The present invention relates to an electronic apparatus such as a laptop computer.

### 2. Description of the Related Art

In laptop computers, operation buttons different from those of a standardized keyboard are provided additionally in some cases. For example, in Japanese Patent Application Laid-open No. 2000-020221 (paragraph 0011, Fig. 1), a shutter button that is operated when photographing with a CCD video camera provided to a display portion is provided in addition to a keyboard.

### Summary of the Invention

In a case where a plurality of buttons different from those of the keyboard are provided, it may become difficult to distinguish functions allocated to those buttons from one another. Moreover, since the number of such buttons is more or less restricted due to spatial restrictions, functions that can be allocated thereto are also restricted.

In view of the circumstances as described above, there is a need for an electronic apparatus capable of allocating many functions to a small number of buttons and with which the functions allocated to the buttons can be grasped intuitionally.

According to an embodiment of the present invention, there is provided an electronic apparatus including a display portion, a plurality of first buttons, a second button, and a display controller. The display portion displays a screen. The plurality of first buttons are disposed along an outer circumference of the screen. The display controller displays icons representing functions of the plurality of first buttons at positions respectively corresponding to the plurality of first buttons along an inner circumference of the screen, and changes at least one of the functions allocated to the plurality of first buttons and at least one of the displayed icons corresponding to the changed function in accordance with a press of the second button.

In the embodiment of the present invention, the display controller displays the icons representing the functions of the plurality of first buttons at positions respectively corresponding to the plurality of first buttons along the inner circumference of the screen. Therefore, the functions allocated to the buttons can be grasped intuitionally.

Further, the display controller changes at least one of the functions allocated to the plurality of first buttons and at least one of the displayed icons corresponding to the changed function in accordance with the press of the second button. Therefore, many functions can be allocated to a small number of icons.

The display controller may display the icons to be small and movable on the screen in accordance with a predetermined operation.

The icons do not become an obstacle in a case where a document or the like is displayed almost fully on such a screen of the display portion, for example. In a laptop computer in particular, a document or the like is often displayed on a full screen of the display portion. Thus, displaying the icons to be small and movable on the screen is extremely effective.

The display controller may change a display mode of the display portion in accordance with the press of the second button.

Because the display mode of the display portion such as a background screen is changed along with the change of the functions allocated to the first buttons, it becomes easier to intuitionally grasp functions to which the functions have been changed.

The electronic apparatus may further include a third button, and the display controller may display on the screen of the display portion a setting screen with respect to the display controller in accordance with a press of the third button.

Thus, it becomes possible to easily display the setting screen and easily carry out settings with respect to the display controller.

A main body of the electronic apparatus may include a first casing that has a first surface on which an operation portion is provided, a second casing that has a second surface capable of facing the first surface and on which the display portion is provided, and a cylindrical hinge to rotatably couple the first casing and the second casing on a back surface side of the main body of the electronic apparatus, the hinge being provided with the plurality of first buttons and the second button.

Due to the provision of the first and second buttons on the cylindrical hinge, it becomes extremely easy to visually recognize the first and second buttons. It is more desirable to also provide the third button on the cylindrical hinge in addition to the first and second buttons.

As described above, according to the embodiment of the present invention, the functions allocated to the buttons can be grasped intuitionally, and many functions can be allocated to a small number of buttons.

These and other objects, features and advantages of the present invention will become more apparent in light of the following detailed description of best mode embodiments thereof, as illustrated in the accompanying drawings.

### Brief Description of Drawings

Fig. 1 is as perspective view of an electronic apparatus in an opened state according to an embodiment of the present invention;
Fig. 2 is a perspective view of the electronic apparatus shown in Fig. 1 in a closed state;
Fig. 3 is a plan view of the electronic apparatus shown in Fig. 1;
Fig. 4 is a block diagram showing a schematic structure of the electronic apparatus according to the embodiment of the present invention;
Fig. 5 is a flowchart showing an operation of start processing of the electronic apparatus according to the embodiment of the present invention;
Fig. 6 is a flowchart showing an operation of icon display processing of the electronic apparatus according to the embodiment of the present invention;
Fig. 7 is a flowchart showing an operation of event processing of the electronic apparatus according to the embodiment of the present invention;
Fig. 8 is a flowchart showing an operation of button event processing of the electronic apparatus according to the embodiment of the present invention;
Fig. 9 is a flowchart showing an operation of mouse event processing of the electronic apparatus according to the embodiment of the present invention;
Fig. 10 is a flowchart showing an operation of timer event processing of the electronic apparatus according to the embodiment of the present invention;
Fig. 11 is a flowchart showing an operation of function change processing of the electronic apparatus according to the embodiment of the present invention;
Fig. 12 is a flowchart showing an operation of function activation processing of the electronic apparatus according to the embodiment of the present invention;
Fig. 13 is a flowchart showing an operation of mode switch processing of the electronic apparatus according to the embodiment of the present invention;
Fig. 14 is a flowchart showing an operation of setting screen activation processing of the electronic apparatus according to the embodiment of the present invention;
Fig. 15 is a flowchart showing an operation of setting screen event processing of the electronic apparatus according to the embodiment of the present invention;
Fig. 16 is a flowchart showing an operation of HELP display processing of the electronic apparatus according to the embodiment of the present invention;
Fig. 17 is a flowchart showing an operation of TUTORIAL display processing of the electronic apparatus according to the embodiment of the present invention;
Fig. 18 is a flowchart showing an operation of mode selection processing of the electronic apparatus according to the embodiment of the present invention;
Fig. 19 is a flowchart showing an operation of wallpaper selection processing of the electronic apparatus according to the embodiment of the present invention;
Fig. 20 is a flowchart showing an operation of function selection processing of the electronic apparatus according to the embodiment of the present invention;
Fig. 21 is a flowchart showing an operation of registration name update processing of the electronic apparatus according to the embodiment of the present invention;
Fig. 22 is a flowchart showing an operation of display setting update processing of the electronic apparatus according to the embodiment of the present invention;
Fig. 23 is a flowchart showing an operation of initial setting application processing of the electronic apparatus according to the embodiment of the present invention;
Fig. 24 is a diagram showing a screen at a time when the electronic apparatus according to the embodiment of the present invention is activated;
Fig. 25 is a diagram showing a screen at a time when an icon display mode is contracted in the electronic apparatus according to the embodiment of the present invention;
Fig. 26 is a diagram showing a screen at a time when contracted icons are moved in the electronic apparatus according to the embodiment of the present invention;
Fig. 27 is a diagram showing a screen at a time when a function is activated in the electronic apparatus according to the embodiment of the present invention;
Figs. 28 are diagrams each showing a screen at a time when a mode is changed in the electronic apparatus according to the embodiment of the present invention;
Fig. 29 is a diagram showing a screen at a time when a setting screen is invoked in the electronic apparatus according to the embodiment of the present invention;
Fig. 30 is a diagram showing a screen at a time when HELP is activated in the electronic apparatus according to the embodiment of the present invention;
Fig. 31 is a diagram showing a screen at a time when TUTORIAL is activated in the electronic apparatus according to the embodiment of the present invention;
Fig. 32 is a diagram showing a screen at a time when a mode is selected on the setting screen in the electronic apparatus according to the embodiment of the present invention;
Fig. 33 is a diagram showing a screen at a time when a wallpaper is changed on the setting screen in the electronic apparatus according to the embodiment of the present invention;
Fig. 34 is a diagram showing a screen at a time when a function is changed on the setting screen in the electronic apparatus according to the embodiment of the present invention;
Fig. 35 is a diagram showing a screen of recommended functions used when the function is changed on the setting screen in the electronic apparatus according to the embodiment of the present invention;
Fig. 36 is a diagram showing a screen of Start menu used when the function is changed on the setting screen in the electronic apparatus according to the embodiment of the present invention;
Fig. 37 is a diagram showing a screen of Favorites used when the function is changed on the setting screen in the electronic apparatus according to the embodiment of the present invention;
Fig. 38 is a diagram showing a screen of Explorer used when the function is changed on the setting screen in the electronic apparatus according to the embodiment of the present invention;
Fig. 39 is a diagram showing a screen at a time when a registration name of a function is changed on the setting screen in the electronic apparatus according to the embodiment of the present invention;
Fig. 40 is a diagram showing a screen of a mode name used when the registration name of a function is changed on the setting screen in the electronic apparatus according to the embodiment of the present invention;
Fig. 41 is a diagram showing a screen of names used when the registration name of a function is changed on the screen in the electronic apparatus according to the embodiment of the present invention;
Fig. 42 is a diagram showing a screen of paths used when the registration name of a function is changed on the setting screen in the electronic apparatus according to the embodiment of the present invention; and
Fig. 43 is a diagram showing a screen at a time of restoring a setting to an initial setting on the setting screen in the electronic apparatus according to the embodiment of the present invention.

### Description of Preferred Embodiments

Hereinafter, an embodiment of the present invention will be described with reference to the drawings.

In this embodiment, a laptop computer is taken as an example of an electronic apparatus.

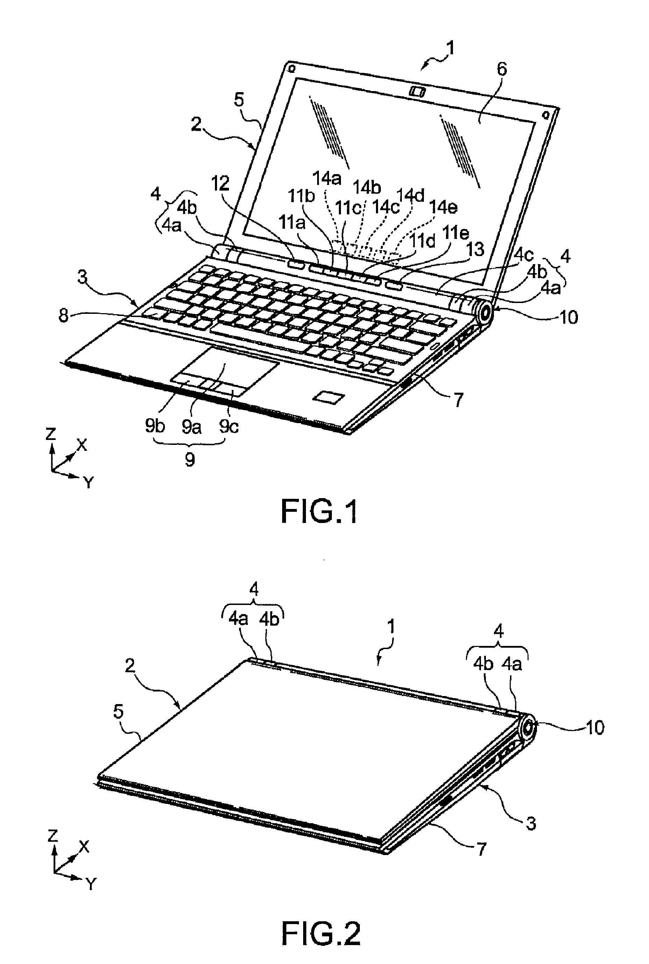

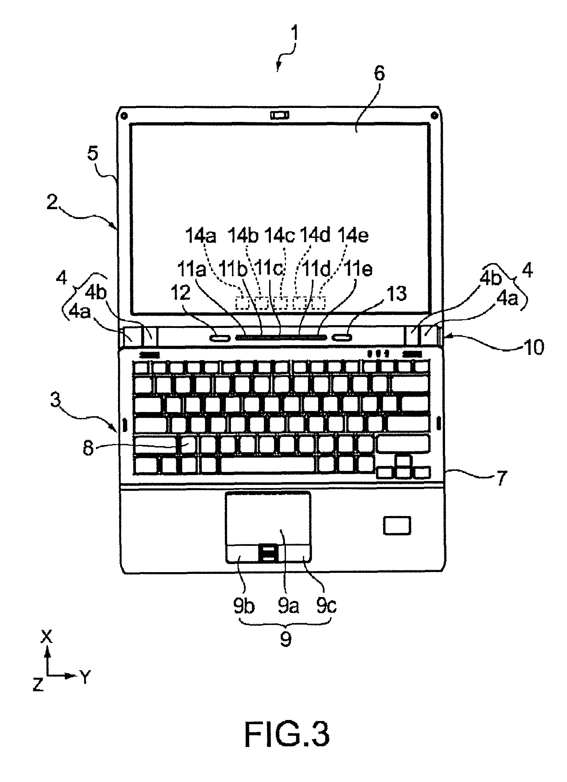

Fig. 1 is as perspective view of the electronic apparatus in an opened state according to the embodiment of the present invention. Fig. 2 is a perspective view of the electronic apparatus in a closed state. Fig. 3 is a plan view of the electronic apparatus in the opened state.

An electronic apparatus 1 includes a display portion 2, a main body portion 3, and a hinge 4 for coupling the display portion 2 and the main body portion 3.

The display portion 2 is openable/closeable with respect to the main body portion 3 via the hinge 4. The display portion 2 includes a display-side casing 5, a display screen 6, and a display processing unit (not shown) that is provided inside the display-side casing 5 and carries out display processing.

The display-side casing 5 is a casing of the display portion 2 that accommodates the display processing unit (not shown). The display screen 6 is a screen for displaying information constituted of liquid crystal devices, and faces the main body portion 3 when the electronic apparatus 1 is closed.

The main body portion 3 includes components such as a main-body-side casing 7, a keyboard unit 8, a mouse pad unit 9, a controller to be described later, and a hard disk apparatus (not shown).

The main-body-side casing 7 is a casing of the main body portion 3 and includes two cylindrical coupling portions 4a. The keyboard unit 8 includes a plurality of keys, for example, and functions as an input portion of the electronic apparatus 1. The mouse pad unit 9 includes a mouse pad 9a, a left click button 9b, and a right click button 9c and functions as an input portion of the electronic apparatus 1. The controller is implemented in a multilayer printed wiring board inside the main-body-side casing 7. The controller receives input signals from the keyboard unit 8 and the like and carries out various types of processing such as operational processing, control processing, image processing, and output processing to the display portion 2, thus functioning practically as a functional main body of the electronic apparatus 1.

The hinge 4 is structured such that the coupling portions 4a fixed to the main body portion 3 and coupling portions 4b formed on the display portion 2 are coupled rotatably on both sides of the hinge 4 in a Y direction. The coupling portion 4a on a right end of the hinge 4 in an axial direction (Y direction in Fig. 1) is provided with a power supply switch unit 10. The power supply switch unit 10 is fixed to the main-body-side casing 7, for example. The power supply switch unit 10 is structured such that a cylindrical end surface and outer circumferential surface thereof are lit in blue or orange or blink in those colors according to an operation status.

The hinge 4 includes a connection portion 4c between the sets of coupling portions 4a and the coupling portions 4b disposed one each on both sides in the Y direction. The hinge 4 including the coupling portions 4a, the coupling portions 4b, and the connection portion 4c has a cylindrical shape integrally formed in terms of an outer appearance.

At an upper portion of a center of the connection portion 4c, five adjacent programmable buttons (first buttons) 11a to 11e are arranged linearly, for example. On the left-hand side of the programmable buttons 11a to 11e, a MODE button (second button) 12 used for switching a plurality of functions respectively allocated to the programmable buttons 11a to 11e is provided. On the right-hand side of the programmable buttons 11a to 11e, a SETTING button (third button) 13 used for invoking a setting screen for a user to select an option is provided.

By thus providing the programmable buttons 11a to 11e, the MODE button 12, and the SETTING button 13 on the hinge 4, it becomes extremely easy to visually recognize those buttons and moreover press those buttons.

It should be noted that the programmable buttons 11a to 11e are arranged adjacent to each other whereas a gap of a certain degree is disposed between the programmable buttons (first buttons) 11a to 11e and the MODE button 12 and between the programmable buttons 11a to 11e and the SETTING button 13. Accordingly, the programmable buttons (first buttons) 11a to 11e are clearly differentiated from the MODE button 12 and the SETTING button 13, with the result that operability is improved.

In a display mode, five function icons 14a to 14e are displayed on the display screen 6 along an inner circumference of a lower portion of the display screen 6. The function icons 14a to 14e are displayed at positions respectively corresponding to the programmable buttons 11a to 11e. In other words, above the programmable button 11a, for example, the function icon 14a indicating a function set to the programmable button 11a is displayed. The same holds true for the other function icons 14b to 14e.

The setting screen invoked by the SETTING button 13 can be used to allocate the following functions to the programmable buttons 11a to 11e.
(1) system operations such as mute, speaker volume adjustment, and switch of display
(2) application software installed in system by user
(3) any file stored in system (application software, image, video, and document)
(4) webpage address stored in system by user

It is possible to set functions to the programmable buttons 11a to 11e by a drag-and-drop operation to the function icons 14a to 14e. In other words, the following functions or interlocking applications can be allocated by the drag-and-drop operation to the function icons 14a to 14e.
(1) icon of any file stored in system (application software, image, video, and document)
(2) link icon displayed on address column of web browser

In a case where a file other than an application is allocated to the programmable buttons 11a to 11e, the file can be viewed, reproduced, or the like by an application that an OS (Operating System) has designated for that type of a file or an application that the user has designated. For example, when a plurality of music reproduction applications exist, a music file can be reproduced by a music reproduction application designated by the user. In this case, the user can designate the music reproduction application itself, but it is also possible to designate a music reproduction application for each music file.

As a display mode of the function icons 14a to 14e, in addition to the display at the fixed positions shown in Fig. 1 or 3, it is also possible to change the display position on the screen by contracting the icons. This switch can be made by operating an expansion/contraction mark 15 provided in the vicinity of the function icons 14a to 14e.

The function icons 14a to 14e can be displayed in the following display modes that can be selected on the setting screen.
(1) display in which function icons are moved to front or back according to window operation of user (same operation as application run on other systems)
(2) forcible display of function icons at very front at all times
(3) automatic nondisplay after certain time period

It should be noted that when a device for detecting an approach or a contact state of a user's finger is used for the programmable buttons 11a to 11e, it is also possible to select a mode in which the icons are displayed upon approach of a finger and hidden upon withdrawal.

The functions allocated to the programmable buttons 11a to 11e can be switched collectively according to a press of the MODE button 12, but the following operations can also be carried simultaneously.
(1) switch of system settings
(2) switch of display modes of desktop (wallpaper, position and number of icons, and size and position of window), activated application software, hardware control (volume setting and display luminance setting), etc.
(3) system operation/application software activation
(4) reproduction/display of sound, image, and video, and activation of application software

It should be noted that it is possible to automatically switch the set functions according to application software activated by the user, an inserted medium, or the like.

Next, a structure for realizing the functions as described above will be described.

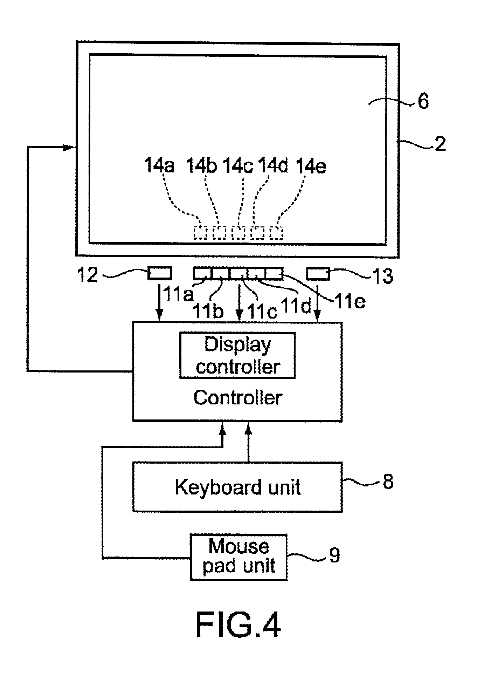

Fig. 4 is a block diagram showing a schematic structure of the electronic apparatus 1 shown in Figs. 1 to 3.

The electronic apparatus 1 includes the display portion 2 for displaying a screen on the display screen 6, the keyboard unit 8, the mouse pad unit 9, the programmable buttons 11a to 11e, the MODE button 12, the SETTING button 13, and a controller 17 including a display controller 16.

The controller 17 collectively controls the entire electronic apparatus 1.
The display controller 16 controls display of the screen on the display screen 6 in accordance with inputs from the input portions (keyboard unit 8, mouse pad unit 9, programmable buttons 11a to 11e, MODE button 12, and SETTING button 13).

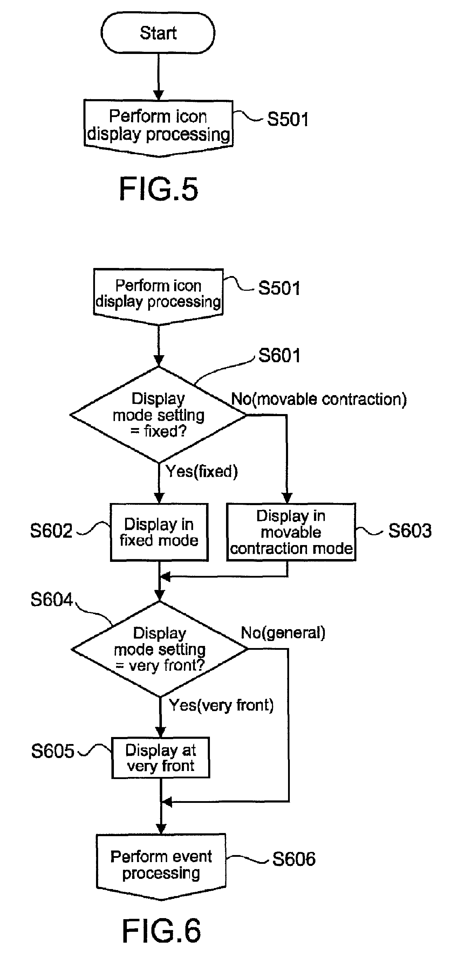

Figs. 5 to 23 are flowcharts showing operations of the electronic apparatus 1 structured as described above.

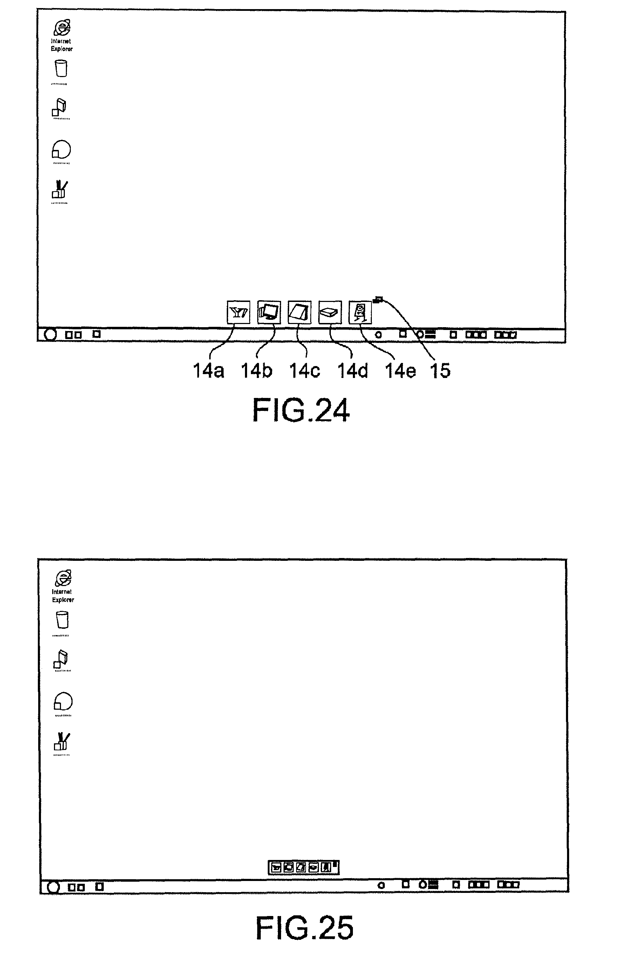

Figs. 24 to 43 are diagrams showing examples of screens displayed on the display screen 6.

When the electronic apparatus 1 is activated (Fig. 5), the function icons 14a to 14e are displayed at a lower portion of the desktop at positions above the programmable buttons 11a to 11e of the main body as an initial state at a time of shipment as shown in Fig. 24 (Step 501).

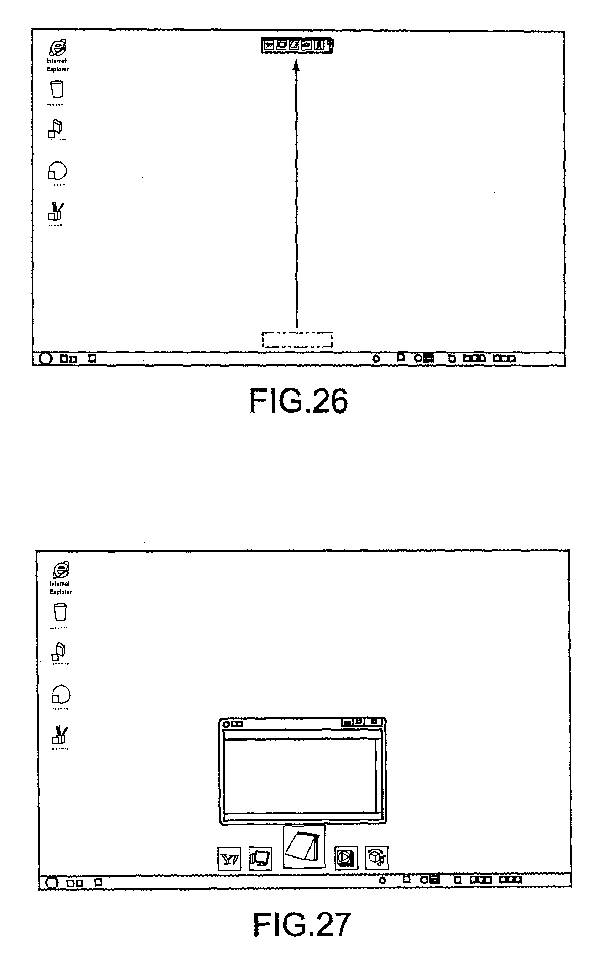

In icon display processing (Fig. 6), a display mode setting of the programmable buttons 11a to 11e is fixed as shown in Fig. 24 (Steps 601 and 602). However, when the expansion/contraction mark 15 provided in the vicinity of the function icons 14a to 14e is clicked to thus switch the display mode (Steps 601 and 603), the contracted function icons 14a to 14e are displayed (Fig. 25). The contracted function icons 14a to 14e that are displayed are movable on the screen by drag-and-drop (Fig. 26). Accordingly, while other files or webpages (other windows) are opened, for example, the function icons 14a to 14e can be displayed with an unobtrusive size and moved to an unobtrusive position.

The function icons 14a to 14e can also be displayed at the very front depending on the setting on the setting screen (Steps 604 and 605). After that, the process advances to event processing (Step 606).

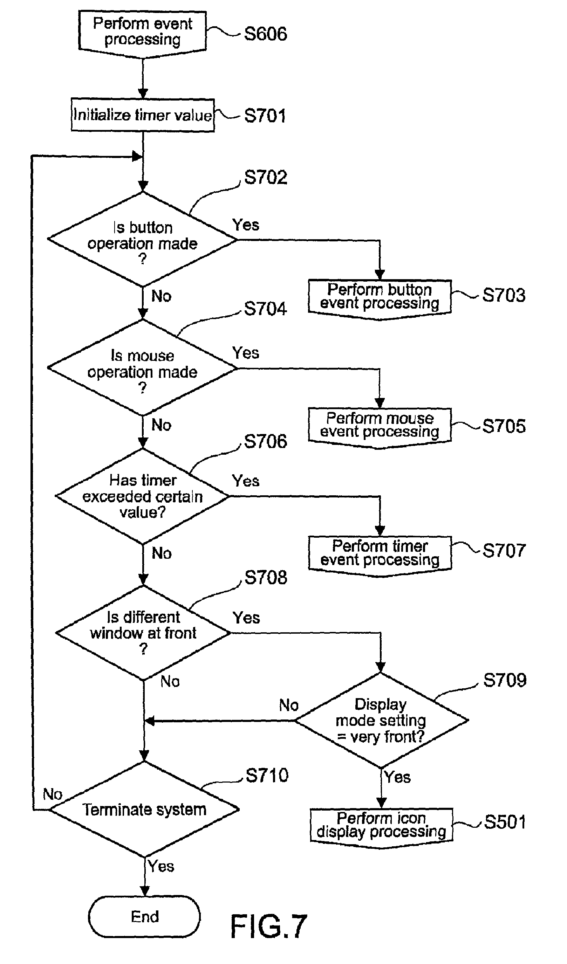

In the event processing (Fig. 7), a timer value is initialized first (Step 701), and the following processing are executed thereafter.
(1) button event processing upon button operation (Steps 702 and 703)
(2) mouse event processing upon mouse operation (Steps 704 and 705)
(3) timer event processing upon timer exceeding certain value (Steps 706 and 707)

As long as the timer does not exceed a certain time period in Step 706 and as long as the function icons 14a to 14e are set to be displayed at the very front even when another window is displayed at the front on the screen (Steps 708 and 709), the process returns to the icon display processing (Fig. 6). If not, the process returns to Step 702 as long as the system is not terminated (Step 710).

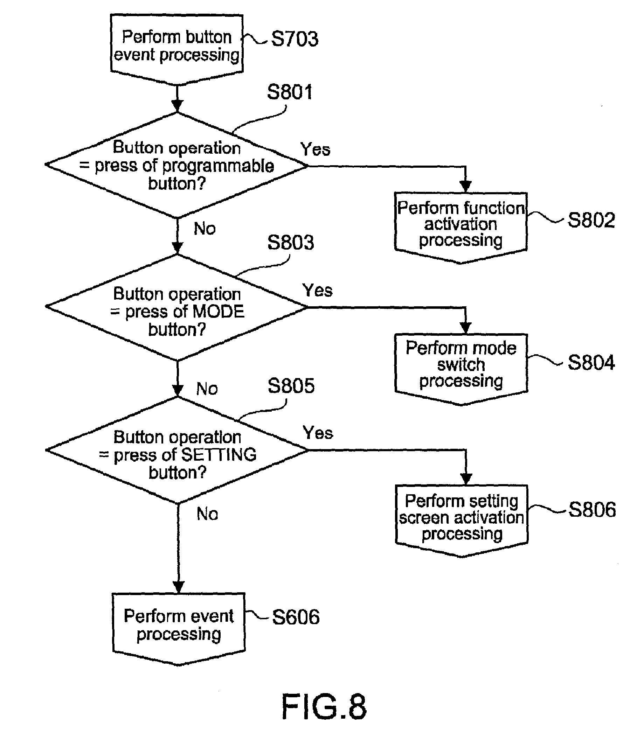

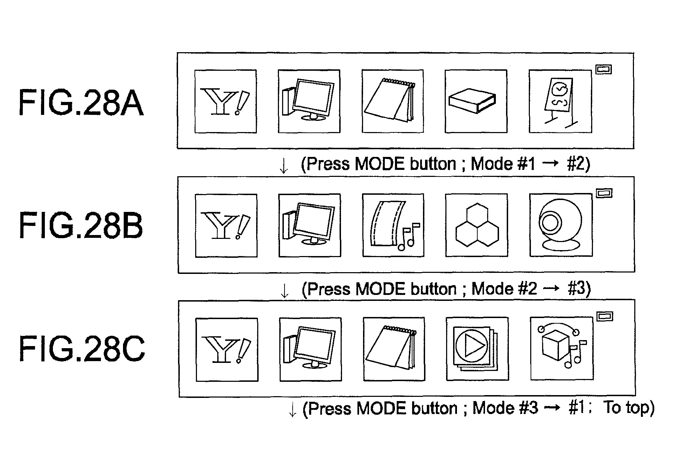

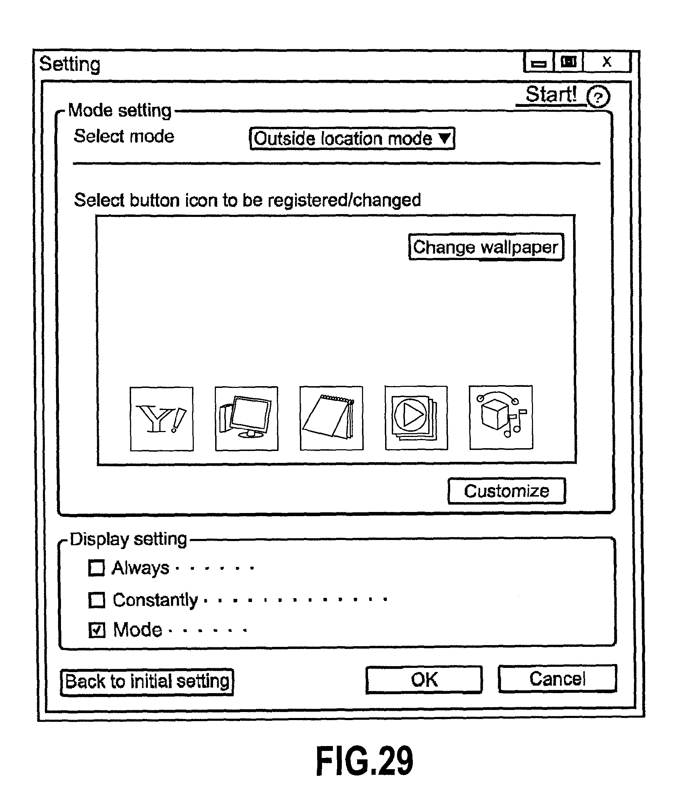

In the button event processing (Fig. 8), the following processing are executed.
(1) function activation processing as shown in Fig. 27 upon programmable buttons 11a to 11e being pressed (Steps 801 and 802)
(2) mode switch processing as shown in Fig. 28 upon MODE button 12 being pressed (Steps 803 and 804)
(3) setting screen activation processing as shown in Fig. 29 upon SETTING button 13 being pressed (Steps 805 and 806)

The process returns to the event processing (Step 606) if any of the buttons is not pressed.

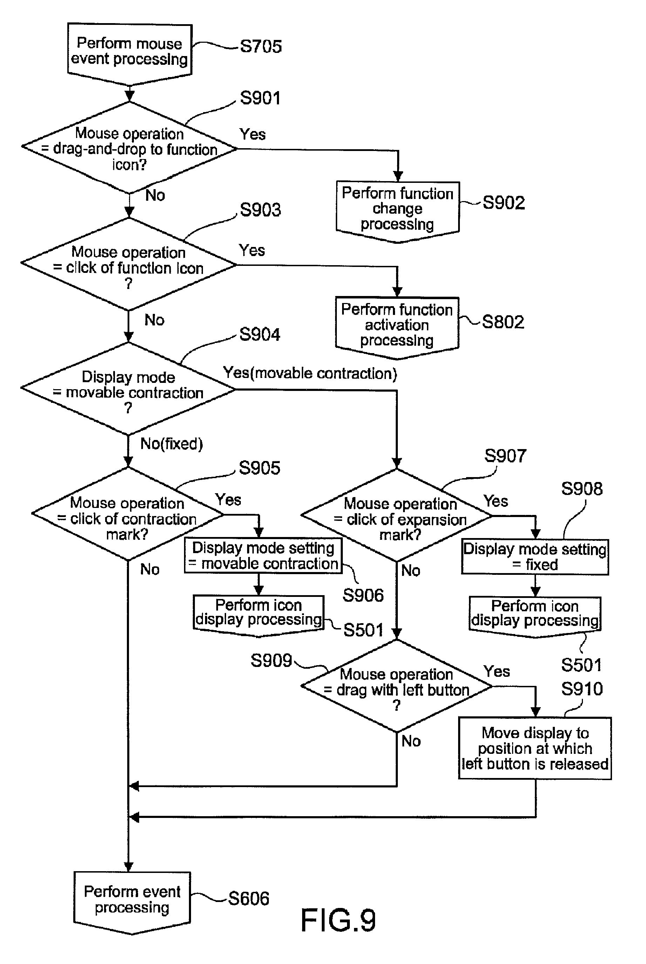

In the mouse event processing (Fig. 9), the following processing are executed.
(1) function change processing upon icon (function target) being drag-and-dropped to function icons 14a to 14e by mouse operation (Steps 901 and 902)
(2) function activation processing as shown in Fig. 27 upon function icons 14a to 14e being clicked by mouse operation (Steps 903 and 802)

Moreover, in the mouse event processing (Fig. 9), the following processing is executed in accordance with which of a fixed display mode shown in Fig. 24 and a movable contraction mode shown in Figs. 25 and 26 the display mode of the function icons 14a to 14e is (Step 904).

Specifically, when the expansion/contraction mark 15 is clicked in the fixed display mode shown in Fig. 24 (Step 905), the display mode of the function icons 14a to 14e is switched to the movable contraction mode (Step 906). After that, the process returns to the icon display processing (Step 501). When the expansion/contraction mark 15 is not clicked in the fixed display mode shown in Fig. 24 (Step 905), the process returns to the event processing (Step 606).

On the other hand, when the expansion/contraction mark 15 is clicked in the movable contraction mode shown in Figs. 25 and 26 (Step 907), the display mode of the function icons 14a to 14e is switched to the fixed display mode (Step 908). After that, the process returns to the icon display processing (Step 501). When the expansion/contraction mark 15 is not clicked in the movable contraction mode shown in Figs. 25 and 26 (Step 907) and the function icons 14a to 14e are dragged with the left click button 9b of the mouse pad unit 9 (Step 909), the function icons 14a to 14e are moved and displayed at a position at which the pressed left click button 9b is released (Step 910). For example, the function icons 14a to 14e are moved and displayed as shown in Figs. 25 and 26 in the stated order. After that, the process returns to the event processing (Step 606).

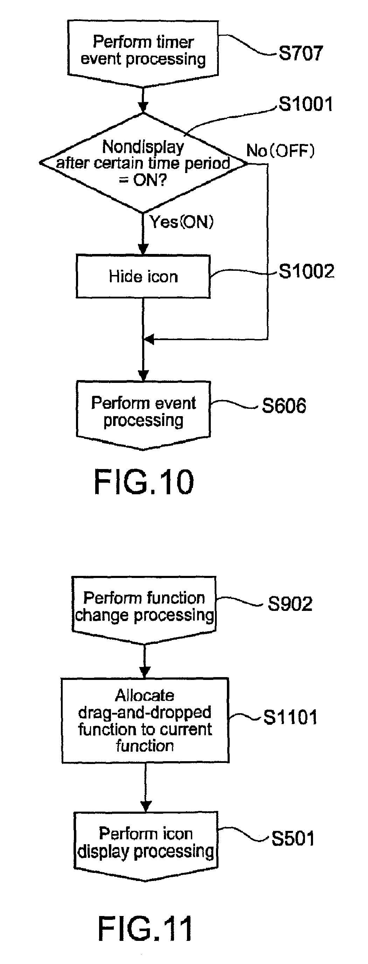

In the timer event processing (Fig. 10), it is judged whether a setting of nondisplay after a certain time period is on (Step 1001). When the setting of nondisplay after a certain time period is on, the function icons 14a to 14e are hidden until the timer exceeds a certain value (Step 1002). After that, the process returns to the event processing (Step 606). Accordingly, the function icons 14a to 14e can be hidden temporarily in a case where a user wishes to display a moving image or the like on a full screen.

In the function change processing (Fig. 11), functions drag-and-dropped to the function icons 14a to 14e using the left click button 9b of the mouse pad unit 9 are allocated to the current functions (Step 1101). After that, the process returns to the icon display processing (Step 501).

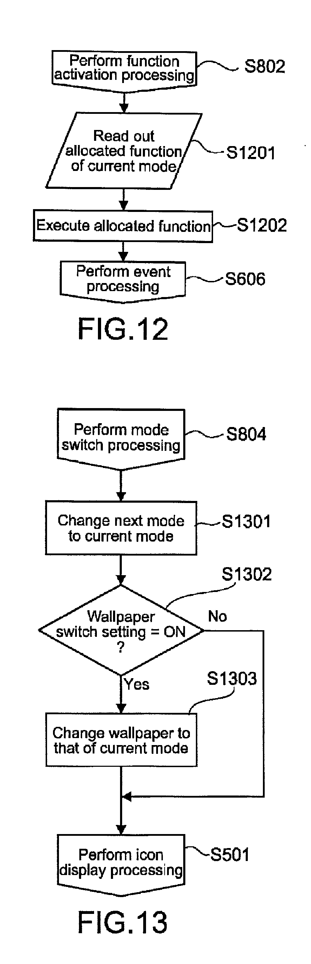

In the function activation processing (Fig. 12), a function currently allocated to the clicked one of the function icons 14a to 14e is invoked (Step 1201). Then, the allocated function is executed as shown in Fig. 27 (Step 1202). Fig. 27 shows an example in which a function of "Notepad" is allocated to the pressed one of the programmable buttons 11a to 11e, and "Notepad" is thus activated. After that, the process returns to the event processing (Step 606).

In the mode switch processing (Fig. 13), the next mode is changed to the current mode in accordance with the press of the MODE button 12 (Step 1301). When a switch of wallpaper is set to ON (Step 1302), a wallpaper is changed to that of the current mode (Step 1303). By thus changing the wallpaper according to the mode change, the user can intuitionally grasp the current mode, with the result that operability is improved. After that, the process returns to the icon display processing (Step 501).

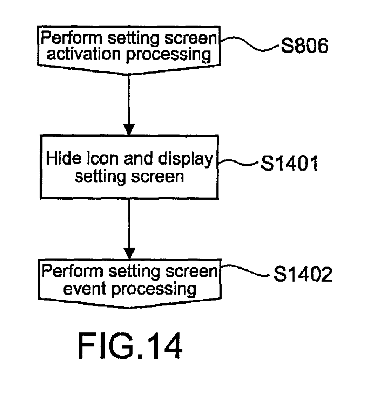

In the setting screen activation processing (Fig. 14), the function icons 14a to 14e are hidden in accordance with the press of the SETTING button 13, and a setting screen as shown in Fig. 29 is activated and displayed (Step 1401). After that, the process advances to setting screen event processing (Step 1402).

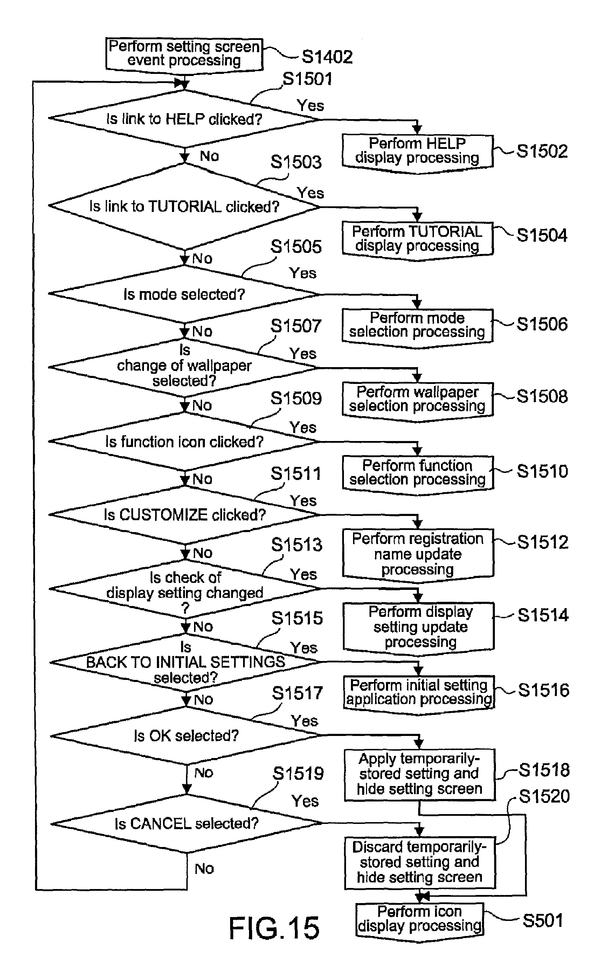

In the setting screen event processing (Fig. 15), the following processing are executed.
(1) HELP display processing upon link to "HELP" being clicked on setting screen (Steps 1501 and 1502)
(2) TUTORIAL display processing upon link to "TUTORIAL" being clicked on setting screen (Steps 1503 and 1504)
(3) mode selection processing upon mode selection on setting screen (Steps 1505 and 1506)
(4) wallpaper selection processing upon selection of change in wallpaper on setting screen (Steps 1507 and 1508)
(5) function selection processing upon function icon being clicked on setting screen (Steps 1509 and 1510)
(6) registration name update processing upon "Customize" being clicked on setting screen (Steps 1511 and 1512)
(7) display setting update processing upon change in check of display setting on setting screen (Steps 1513 and 1514)
(8) initial setting application processing upon selection of "Back To Initial Settings" on setting screen (Steps 1515 and 1516)

Here, upon selection of OK on the setting screen, the temporarily-stored setting is applied, and the setting screen is hidden (Steps 1517 and 1518). Moreover, upon selection of cancel on the setting screen, the temporarily-stored setting is discarded, and the setting screen is hidden (Steps 1519 and 1520). After that, the process returns to the icon display processing (Step 501).

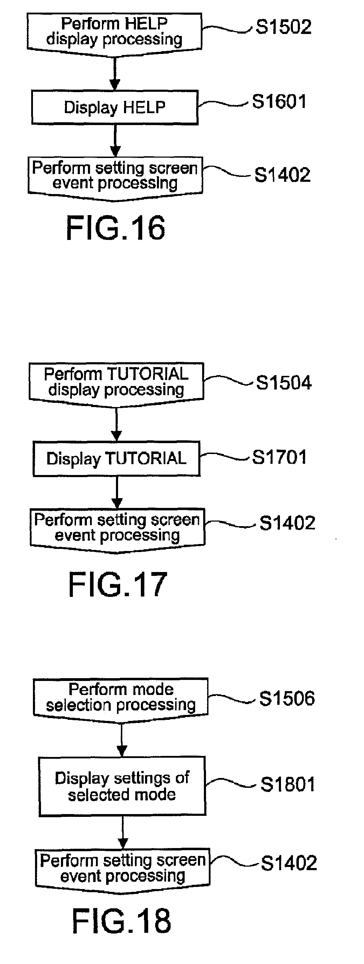

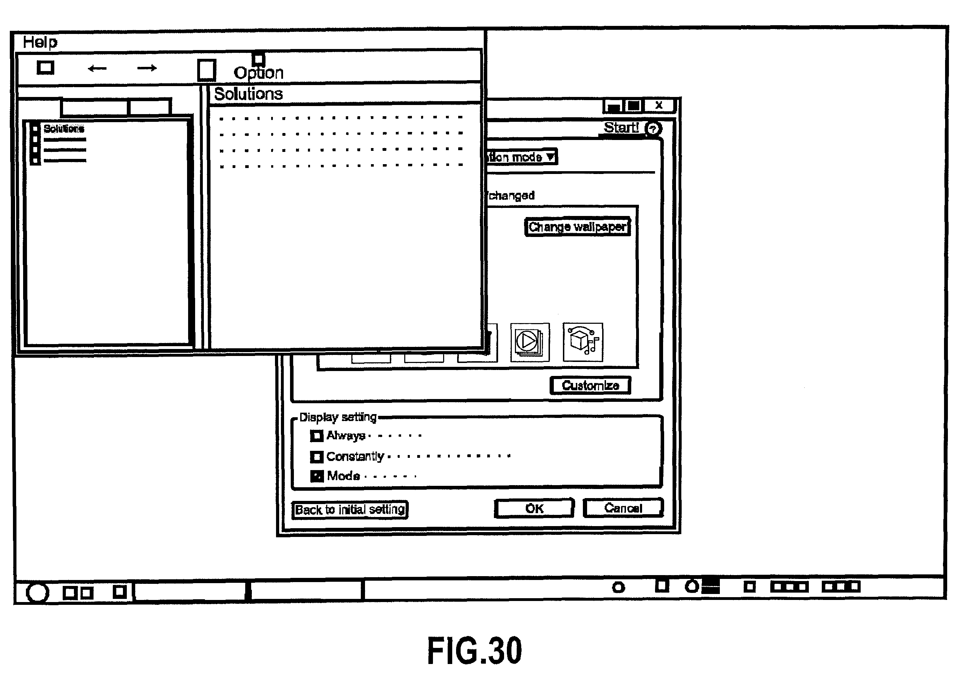

In the HELP display processing (Fig. 16), HELP as shown in Fig. 30 is displayed (Step 1601). After that, the process returns to the setting screen event processing (Step 1402).

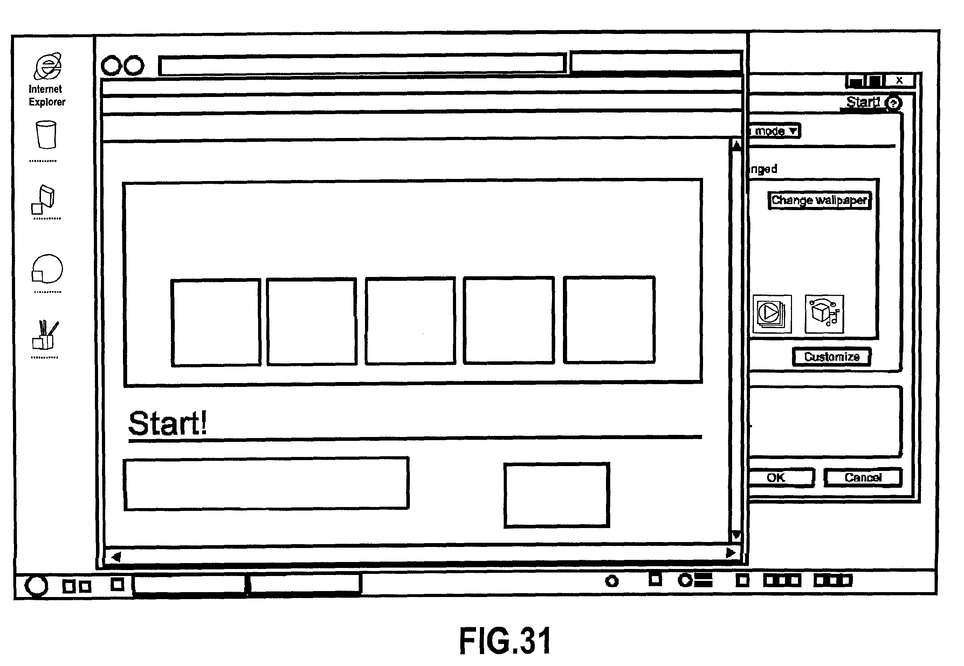

In the TUTORIAL display processing (Fig. 17), TUTORIAL as shown in Fig. 31 is displayed (Step 1701). After that, the process returns to the setting screen event processing (Step 1402).

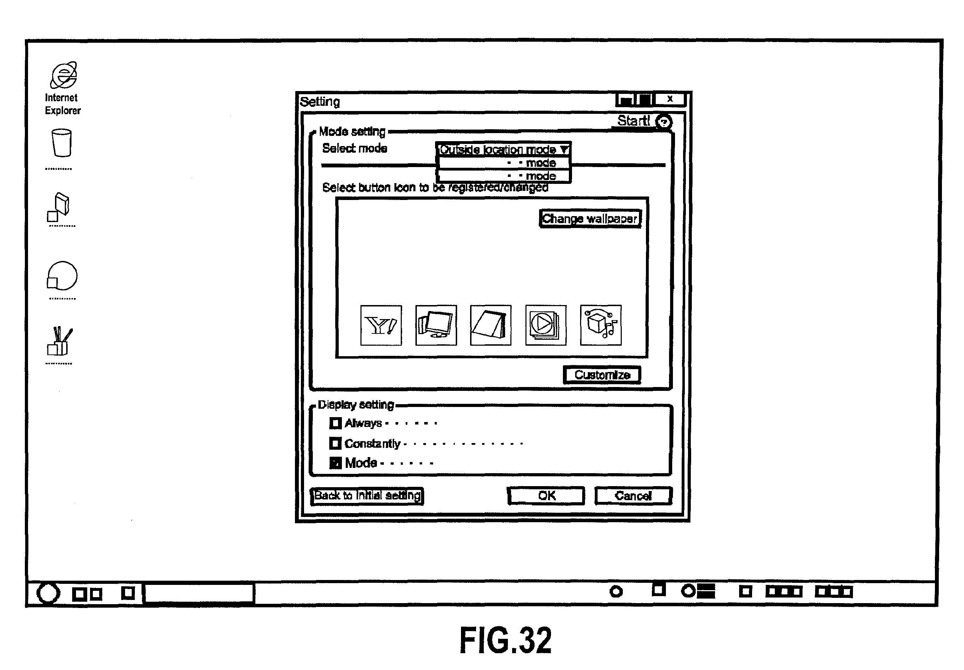

In the mode selection processing (Fig. 18), a setting of a selected mode is displayed as shown in Fig. 32 (Step 1801). When the mode to be changed is selected and specified from a list box of "mode setting" on the setting screen, setting values of the selected mode are displayed on the setting screen so that the values can be changed. After that, the process returns to the setting screen event processing (Step 1402).

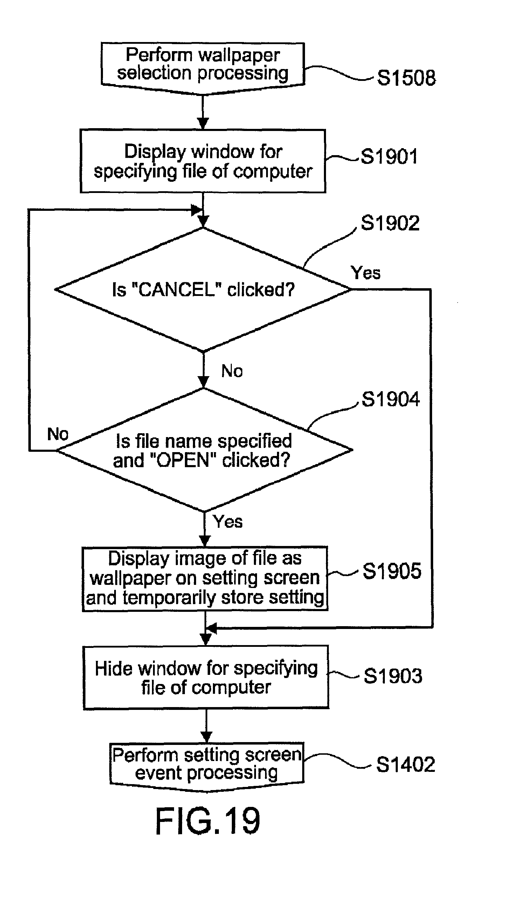

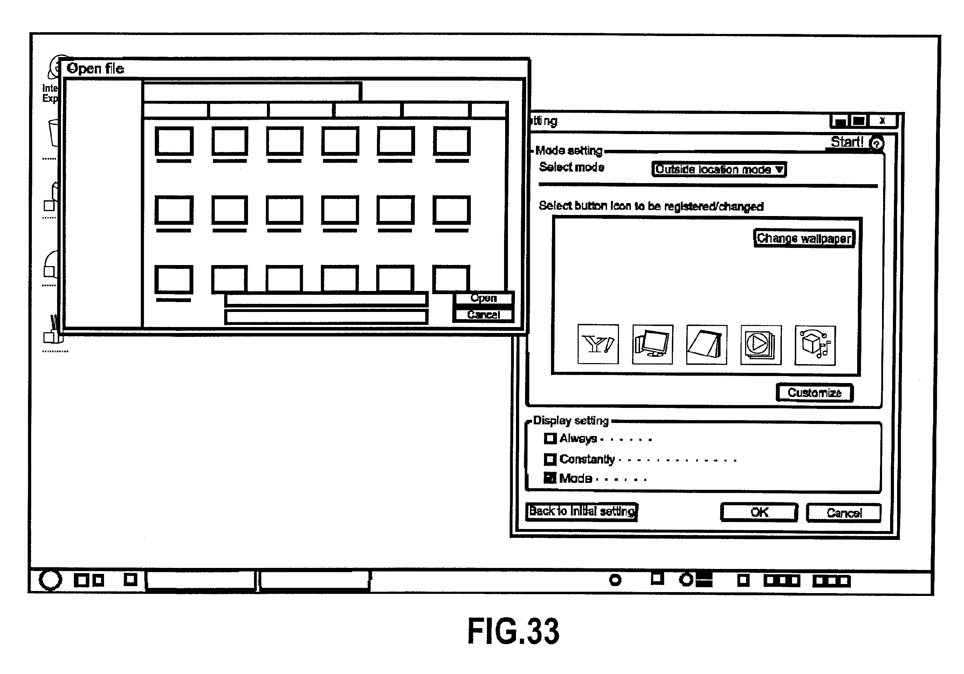

In the wallpaper selection processing (Fig. 19), when files of a computer to be candidates of a wallpaper is specified on the setting screen, the files are displayed in a window as shown in Fig. 33 (Step 1901). When "cancel" is clicked on the setting screen (Step 1902), the window is closed (Step 1903). When a file name is specified in the window and "open" is clicked instead of clicking "cancel" (Step 1904), an image of the selected file is displayed as wallpaper on the setting screen, and the setting is temporarily stored (Step 1905). After that, the process returns to the setting screen event processing (Step 1402).

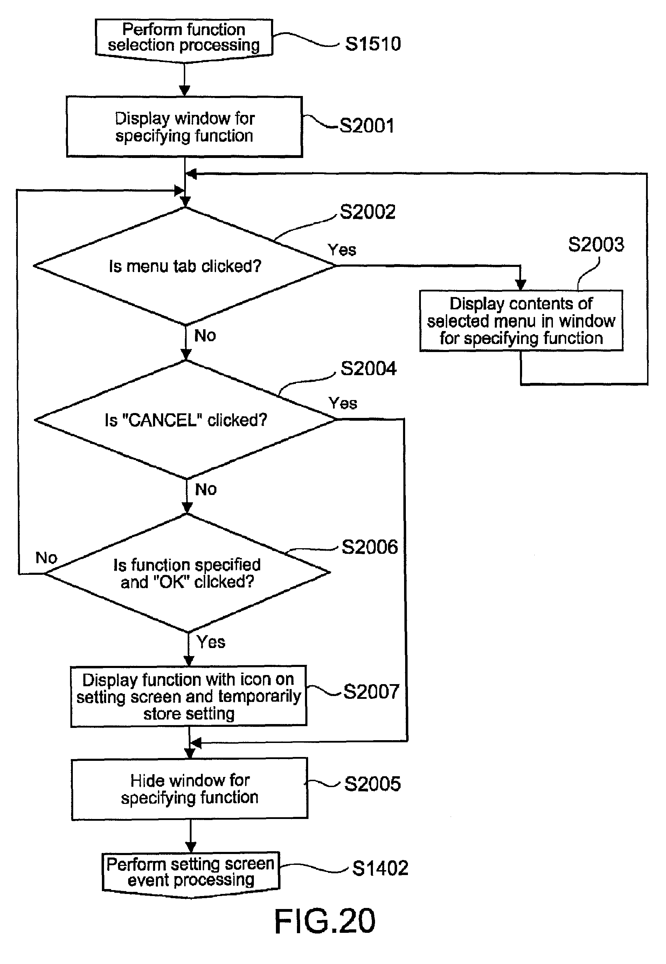

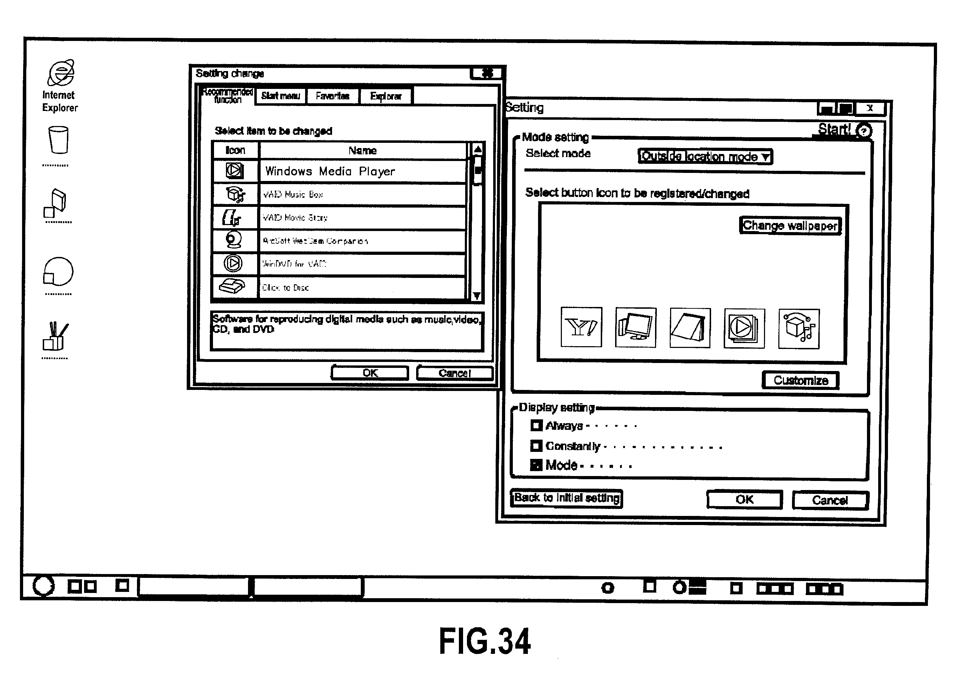

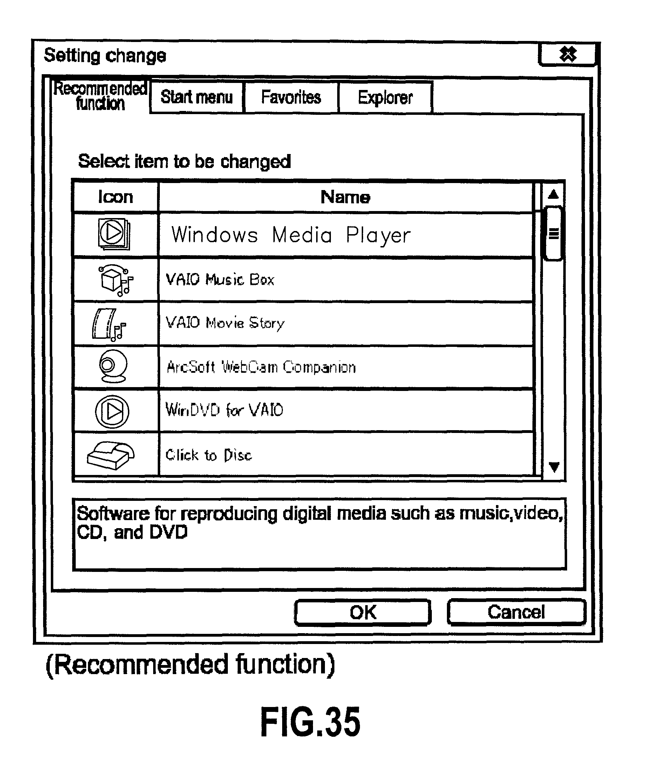

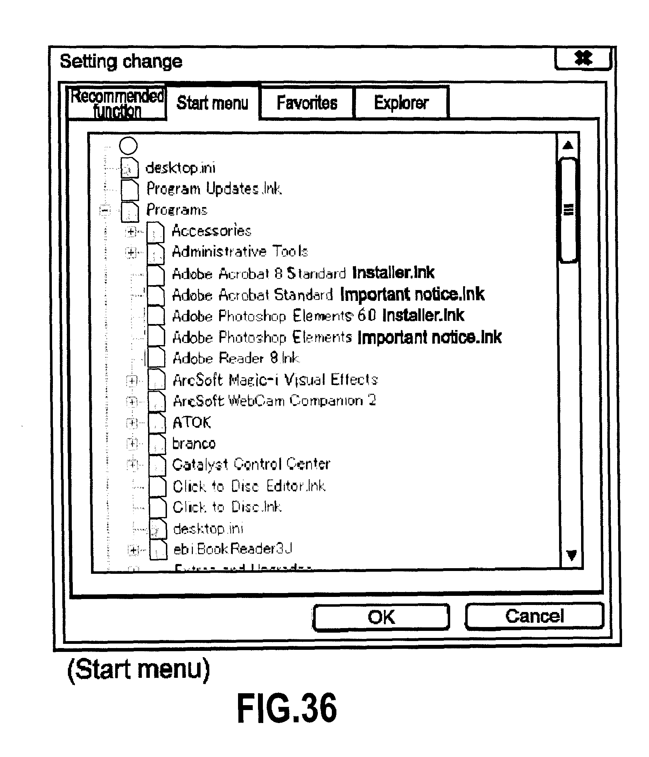

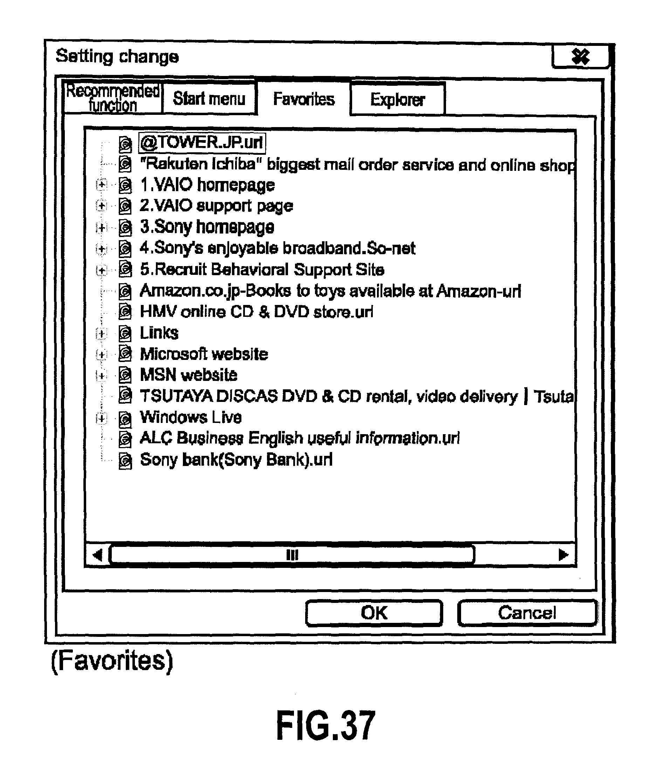

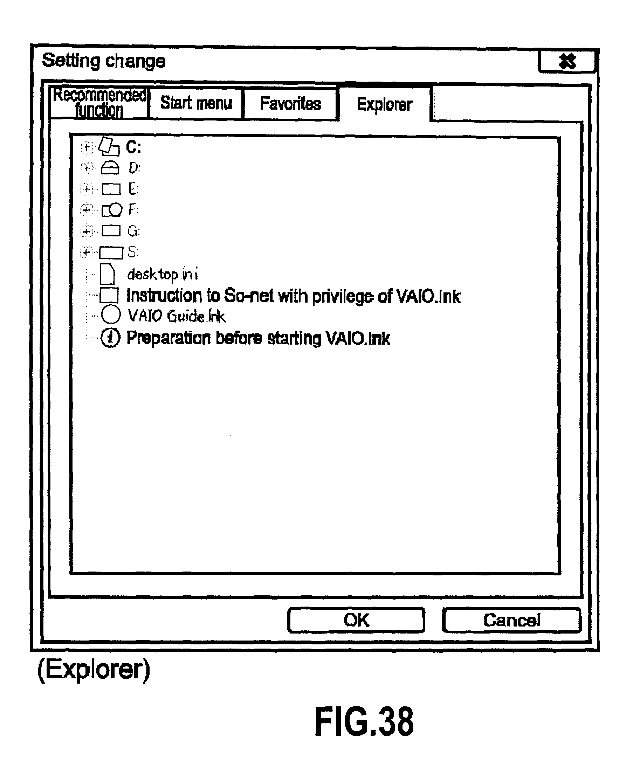

In the function selection processing (Fig. 20), a window for specifying a function is displayed as shown in Fig. 34 (Step 2001). When a menu tab is clicked in the window (Step 2002), contents of the selected menu are displayed in the window for specifying a function (Step 2003). It should be noted that the menu includes a recommended function as shown in Fig. 35, a start menu as shown in Fig. 36, favorites as shown in Fig. 37, and Explorer as shown in Fig. 38.

When "cancel" is clicked instead of the menu tab (Step 2004), the window for specifying a function is hidden (Step 2005). On the other hand, when a function is specified and "OK" is clicked (Step 2006), the function is displayed with the icon on the setting screen, and the setting is temporarily stored (Step 2007). After that, the process returns to the setting screen event processing (Step 1402).

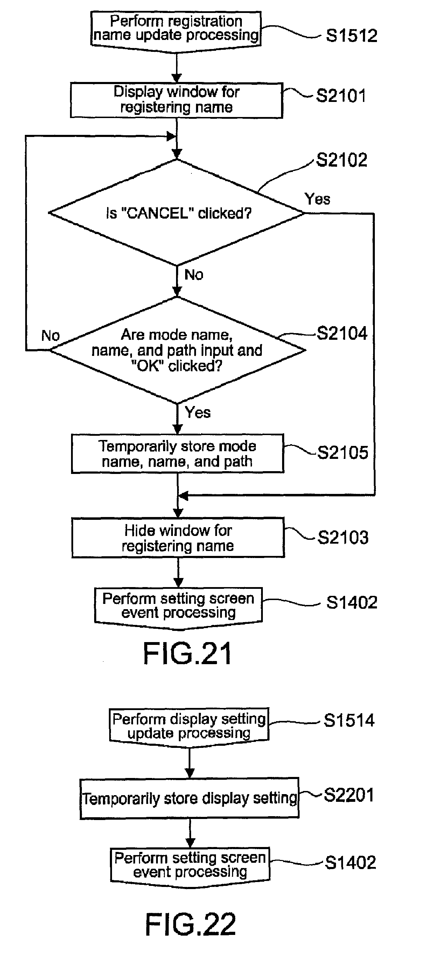

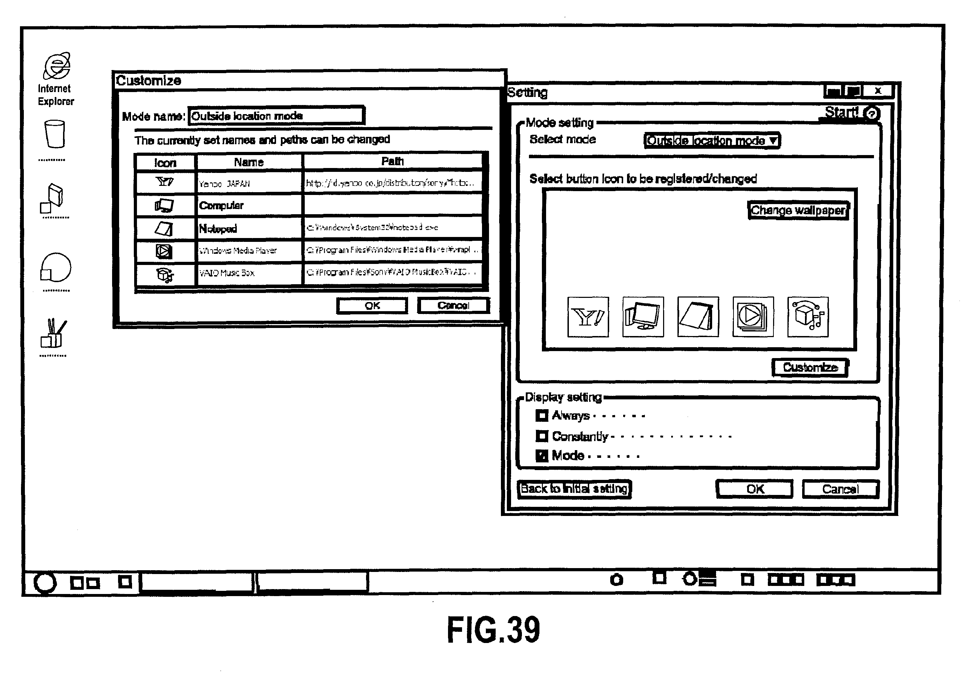

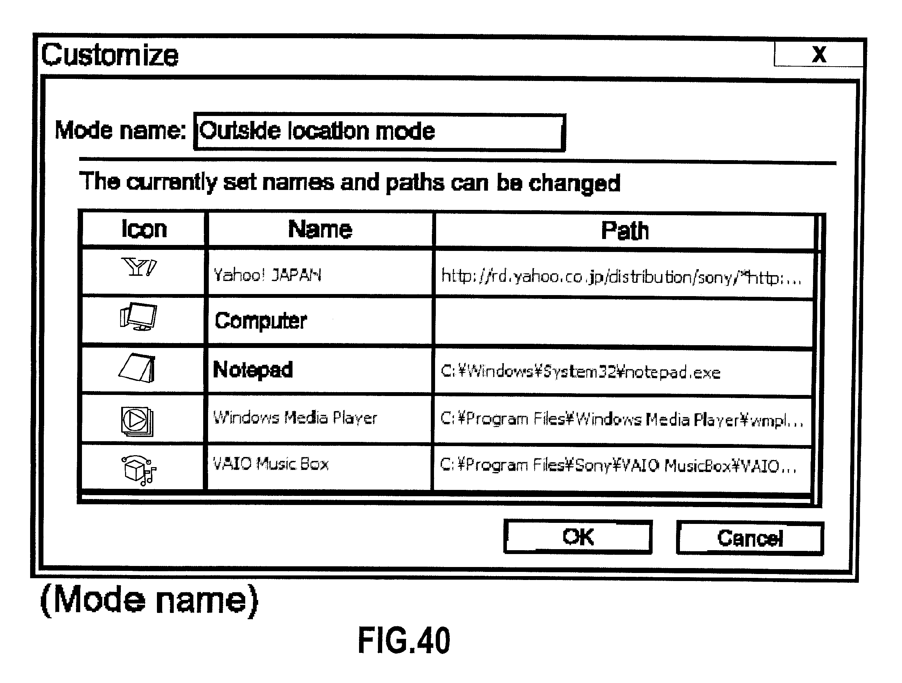

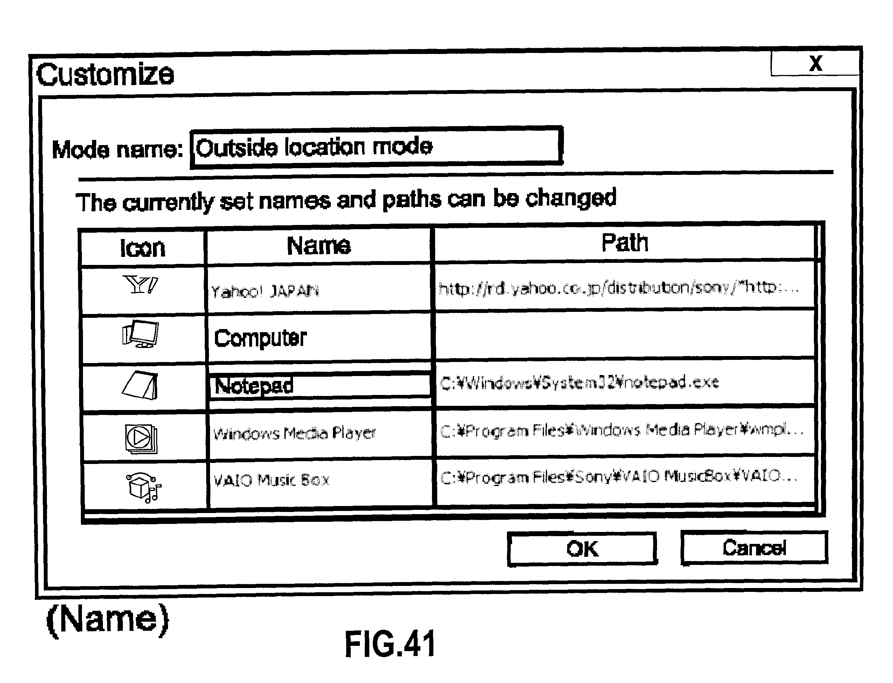

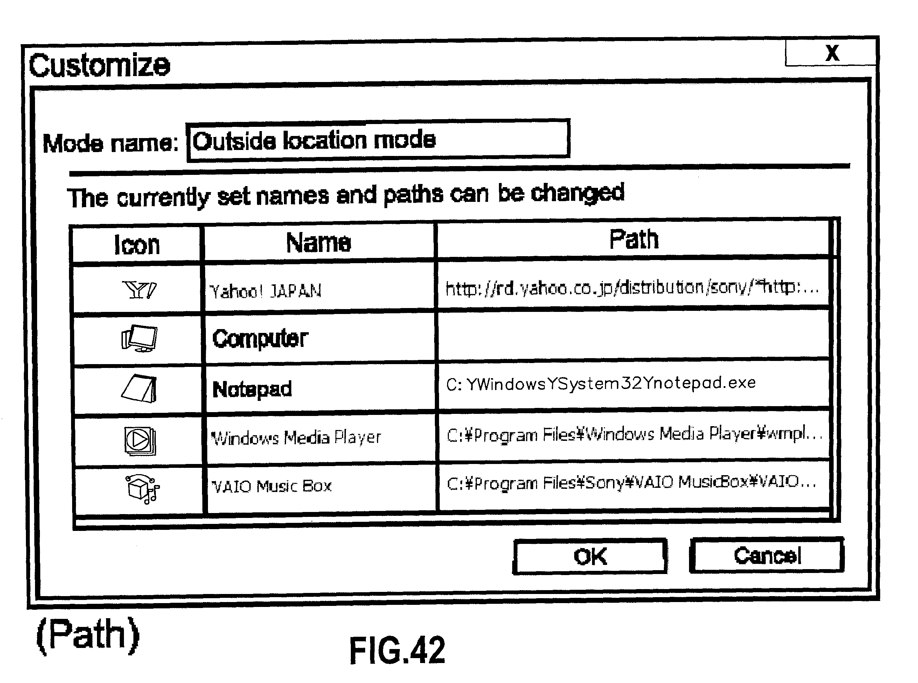

In the registration name update processing (Fig. 21), a window for registering names as shown in Fig. 39 is displayed (Step 2101). When "cancel" is clicked in the window (Step 2102), the window is hidden (Step 2103). On the other hand, when a mode name, name, and a path are input and "OK" is clicked in the window (Step 2104), a mode name as shown in Fig. 40, a name as shown in Fig. 41, and a path as shown in Fig. 42 are temporarily stored (Step 2105). After that, the process returns to the setting screen event processing (Step 1402).

In the display setting update processing (Fig. 22), the display setting is stored temporarily (Step 2201). After that, the process returns to the setting screen event processing (Step 1402).

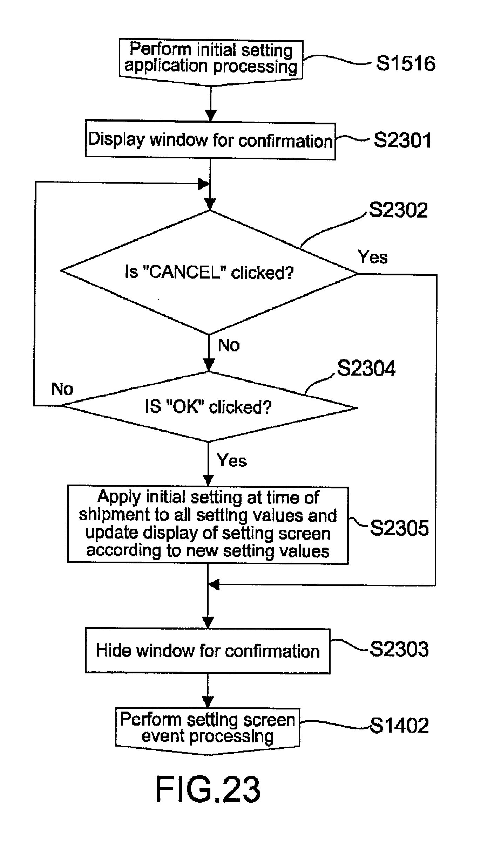

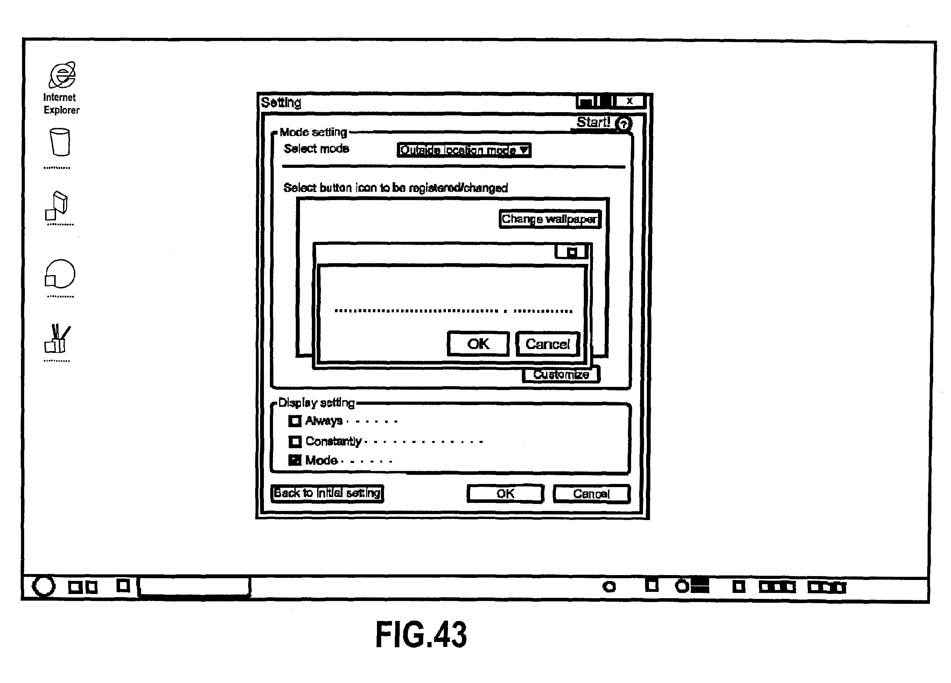

In the initial setting application processing (Fig. 23), a window for confirmation as shown in Fig. 43 is displayed (Step 2301). When "cancel" is clicked in the window (Step 2302), the window is hidden (Step 2303). On the other hand, when "OK" is clicked in the window (Step 2304), an initial setting at the time of shipment is applied to all the setting values, and display on the setting screen is updated based on the new setting values (Step 2305). After that, the process returns to the setting screen event processing (Step 1402).

In this embodiment, the function icons 14a to 14e are displayed along the inner circumference of the screen at positions respectively corresponding to the programmable buttons 11a to 11e. Therefore, it is possible to intuitionally grasp the functions allocated to the programmable buttons 11a to 11e, with the result that operability is improved. Moreover, because the functions allocated to the programmable buttons 11a to 11e and the displayed function icons 14a to 14e are changed in accordance with a press of the MODE button 12, many functions can be allocated to a small number of programmable buttons 11a to 11e. In particular, the application of the present invention is extremely effective in an electronic apparatus that is demanded to have an area of the operation portion reduced as much as possible as in a laptop computer.

In addition, in this embodiment, it is possible to change or newly set the setting of the programmable buttons 11a to 11e and the function icons 14a to 14e using the setting screen. The setting screen can easily be displayed on the screen by pressing the SETTING button 13. Therefore, it is possible to change of newly set the setting with ease.

The present invention is not limited to the above embodiment, and various modifications can be made within the scope of the technical idea of the present invention. The scope of embodiments is within the technical idea of the present invention.

For example, the above embodiment has used the laptop computer as an example of the electronic apparatus. However, the present invention is also applicable to electronic apparatuses such as a display apparatus used in a computer or the like, a cellular phone, and a music reproduction apparatus.

The present application contains subject matter related to that disclosed in Japanese Priority Patent Application JP 2008-146372 filed in the Japan Patent Office on June 4, 2008.

## Claims

1. An electronic apparatus, comprising:
a display portion (2) to display a screen (6);
a plurality of first buttons (11a-11e) disposed along an outer circumference of the screen (6);
a second button (12); and
a display controller to display icons (14a-14e) representing functions of the plurality of first buttons (11a-11e) at positions respectively corresponding to the plurality of first buttons (11a-11e) along an inner circumference of the screen (6), and change at least one of the functions allocated to the plurality of first buttons (11a-11e) and at least one of the displayed icons (14a-14e) corresponding to the changed function in accordance with a press of the second button (12).

2. The electronic apparatus according to claim 1,
wherein the display controller displays the icons (14a-14e) to be small and movable on the screen (6) in accordance with a predetermined operation.

3. The electronic apparatus according to claim 1,
wherein the display controller changes a display mode of the display portion (2) in accordance with the press of the second button (12).

4. The electronic apparatus according to claim 1, further comprising
a third button (13),
wherein the display controller displays on the screen (6) of the display portion a setting screen with respect to the display controller in accordance with a press of the third button (13).

5. The electronic apparatus according to claim 1,
wherein a main body of the electronic apparatus (1) includes a first casing (3) that has a first surface on which an operation portion (8,9) is provided, a second casing (2) that has a second surface capable of facing the first surface and on which the display portion (6) is provided, and a cylindrical hinge (4) to rotatably couple the first casing (3) and the second casing (2) on a back surface side of the main body of the electronic apparatus (1), the hinge (4) being provided with the plurality of first buttons (11a-11e) and the second button (12).
